# FASCICULE DE BREVET EUROPEEN

(11) **EP 4 042 319 B1**
(45) Date de publication et mention de la délivrance du brevet: **05.11.2025**
(21) Numéro de dépôt: 20785993.5
(22) Date de dépôt: 08.10.2020
(51) Int. Cl.: G06V 20/64

(54) **PROCÉDÉ DE RECONNAISSANCE D'OBJETS À REPRÉSENTATIVITÉ AUGMENTÉE**
OBJEKTERKENNUNGSVERFAHREN MIT ERHÖHTER REPRÄSENTATIVITÄT
METHOD FOR OBJECT RECOGNITION WITH AUGMENTED REPRESENTATION

(30) Priorité: 10.10.2019 FR 1911224
(43) Date de publication de la demande: 17.08.2022
(73) Titulaire: THALES, 92400 Courbevoie (FR)
(72) Inventeur: BERECHET, Stefan, 94300 Vincennes (FR); BERECHET, Ion, 94300 Vincennes (FR); BERGINC, Gérard, 78995 Elancourt (FR)
(74) Mandataire: Atout PI Laplace
(86) Numéro de dépôt international: PCT/EP2020/078197
(87) Numéro de publication internationale: WO 2021/069536

(56) Documents cités:
- WO-A1-2016/097168
- US-A1- 2017 262 695
- "Pervasive: International Conference on Pervasive Computing", vol. 7202, 31 January 2012, SPRINGER, Berlin, Heidelberg, ISBN: 978-3-642-17318-9, article JUN LIANG ET AL: "Object Recognition Based on Three-Dimensional Model", pages: 218 - 225, XP055244042, 032548, DOI: 10.1007/978-3-642-31919-8_28
- ION BERECHET ET AL: "Scattering computation for 3D laser imagery and reconstruction algorithms", SPIE - INTERNATIONAL SOCIETY FOR OPTICAL ENGINEERING. PROCEEDINGS, vol. 8495, 30 June 2014 (2014-06-30), US, pages 84950P, XP055714295, ISSN: 0277-786X, ISBN: 978-1-5106-3549-4, DOI: 10.1117/12.929135

## Description

### DOMAINE DE L'INVENTION

L'invention concerne la reconnaissance d'objets en imagerie numérique. Elle s'applique en général à la reconnaissance automatique d'objets au sein d'images numériques prises en conditions difficiles, en particulier à la reconnaissance d'êtres humains à partir d'images numériques bidimensionnelles (2D) prises aléatoirement ou d'objets à partir d'images numériques prises en conditions difficiles (brouillard, distance importante, occlusion de l'objet, angle de prise de vue, image basse résolution...).

### CONTEXTE DE L'INVENTION

Le domaine de l'Intelligence Artificielle (IA) connait actuellement une progression exponentielle dans de multiples secteurs. Cette progression s'explique par la conjonction de trois éléments concomitants : le développement d'algorithmes d'apprentissage appelés "Machine et/ou Deep Learning"; l'apparition de larges bases de données sur internet ("big data") et l'augmentation de la vitesse de calcul des ordinateurs permettant d'entrainer les algorithmes d'apprentissage.

D'une manière générale, la reconnaissance d'objets en IA s'appuie sur des jeux de données d'apprentissage appelés encore "data set". En pratique, chaque jeu d'apprentissage comprend des données d'entrée aboutissant à la création d'un modèle pour fournir une sortie appelée le label de l'image. Par exemple, en apprentissage supervisé (classification), on connaît la sortie et on veut que l'algorithme apprenne à répondre tout seul pour délivrer le label de l'objet ainsi reconnu dans l'image à traiter. L'article par Jun Liang et al: "Object Recognition Based on Three-Dimensional Model", dans "Pervasive: International Conference on Pervasive Computing", 2012-01-31, Springer ,ISBN: 978-3-642-17318-9, vol. 7202, pages 218-225, décrit un procédé de reconnaissance d'un objet à intérêt au sein d'une image numérique 2D.

On sait que pour entrainer un algorithme d'apprentissage supervisé, il est nécessaire de disposer d'une grande quantité de données d'entrée labellisées. Or, actuellement, les bases ou banques de données d'images numériques reposent généralement sur des images numériques d'objets labellisés dont la variabilité en termes d'angle de prise de vue est relativement limitée et/ou sommaire (transformation de l'image via des rotations, décalages, ajout/retrait de bruits...). En outre, la variabilité en reconnaissance humaine est relativement restreinte (par exemple images de la personne à reconnaitre à partir uniquement du visage de celle-ci).

### RESUME DE L'INVENTION

Le but de la présente invention est d'améliorer la situation, notamment en fournissant une solution palliant au moins partiellement les inconvénients précités.

A cette fin, la présente invention propose un procédé de reconnaissance d'un objet à intérêt au sein d'une image numérique 2D dégradée dudit objet.

Selon une définition générale de l'invention, le procédé comprend les étapes suivantes :
- détecter au préalable l'objet à intérêt au sein d'une image numérique 2D et lui attribuer un label ;
- reconstruire un volume tridimensionnel (3D) dudit objet ainsi labellisé à partir d'une pluralité d'images numériques 2D disponibles dudit objet à intérêt ;
- mémoriser dans une base de données au moins un enregistrement relatif audit objet en 3D ainsi reconstruit et labellisé ;
- pour chaque enregistrement ainsi mémorisé,
   - générer une nouvelle pluralité d'images numériques 2D selon une pluralité de modes de vue à partir du volume 3D ainsi reconstruit de chaque objet, les modes de prises de vue comprenant des modes de prise de vues à différents niveaux d'occlusion et/ou d'ajout de bruit ;
   - entrainer un réseau de neurones sur un jeu d'apprentissage composés d'un ensemble élargi d'images numériques 2D ainsi générées et en correspondance avec le label de l'objet à intérêt à reconnaître ;
- à partir d'une image numérique 2D dégradée dudit objet à intérêt à reconnaitre ;
- utiliser le réseau de neurones ainsi entrainé pour délivrer en sortie le label de l'objet et un indice de confiance lié à la reconnaissance de l'objet à intérêt.

De façon surprenante le Demandeur a observé que la génération d'une nouvelle pluralité d'images numériques 2D issues du volume 3D reconstruit de l'objet permet d'augmenter la représentativité (variabilité) des jeux d'apprentissage (data set) et ainsi améliorer l'indice de confiance de la reconnaissance sur une image 2D de l'objet à reconnaître même si l'image 2D est dégradée.

Suivant des modes de réalisation préférés, l'invention comprend une ou plusieurs des caractéristiques suivantes qui peuvent être utilisées séparément ou en combinaison partielles entre elles ou en combinaison totales entre elles :
- si l'indice de confiance est supérieur à un seuil, arrêter la reconnaissance sinon rechercher d'autres éléments pour augmenter la réussite de l'identification ;
- à titre d'exemple non limitatif, la reconstruction en volume 3D est de type tomographie réflective ;
- à titre d'exemple non limitatif, la taille du volume 3D reconstruit de l'objet est de 262 x 262 x 257 pixels ;
- la pluralité d'images 2D issues du volume 3D reconstruit de l'objet appartiennent au groupe formé par images 2D à divers angles (theta, phi, Phi...) ; images à différentes distances ; images avec différents taux d'occlusions, images avec différents bruits ;
- la pluralité d'images 2D issues du volume 3D reconstruit pour des objets à intérêt, de type êtres humains, appartiennent au groupe formé par accessoires, chapeau, lunettes de vision, lunettes de soleil et barbe ;
- à titre d'exemple non limitatif, la résolution des images numériques 2D ainsi générées est de 124 pixels X 253 pixels ;
- à titre d'exemple non limitatif, le réseau de neurones est un réseau de neurones de convolution du type ResNet50, ResNet101 ou ResNet152 (Residual Network avec 50, 101 respectivement 152 couches de neurones).

L'invention concerne en outre un programme d'ordinateur comprenant des instructions de programme pour l'exécution d'un procédé tel que précédemment défini, lorsque ledit programme est exécuté sur un ordinateur.

D'autres caractéristiques et avantages de l'invention apparaîtront à la lecture de la description qui suit d'un mode de réalisation préféré de l'invention, donnée à titre d'exemple et en référence aux dessins annexés.

### BREVE DESCRIPTION DES DESSINS

D'autres avantages et caractéristiques de l'invention apparaitront à l'examen de la description et des dessins dans lesquels :
La figure 1 représente schématiquement les étapes principales du procédé de reconnaissance conforme à l'invention ;
La figure 2 représente schématiquement les sous-étapes de l'étape de constitution d'une base de données selon le procédé conforme à l'invention ;
La figure 3 représente schématiquement des exemples d'images 2D d'un bateau prises en infra-rouge SWIR (Short Wave InfraRed) en plan horizontal selon 9 angles différents pour la reconstruction 3D de l'objet ;
La figure 4 représente schématiquement les sous-étapes de l'étape de génération d'une base de données élargie selon le procédé conforme à l'invention ; et
La figure 5 représente schématiquement des exemples d'enregistrements de la base de données d'images 2D pour l'objet labellisé « bateau2E0A0 » générées à divers points de vue et distance à partir du volume 3D de l'objet reconstruit à partir des images 2D de la figure 3.

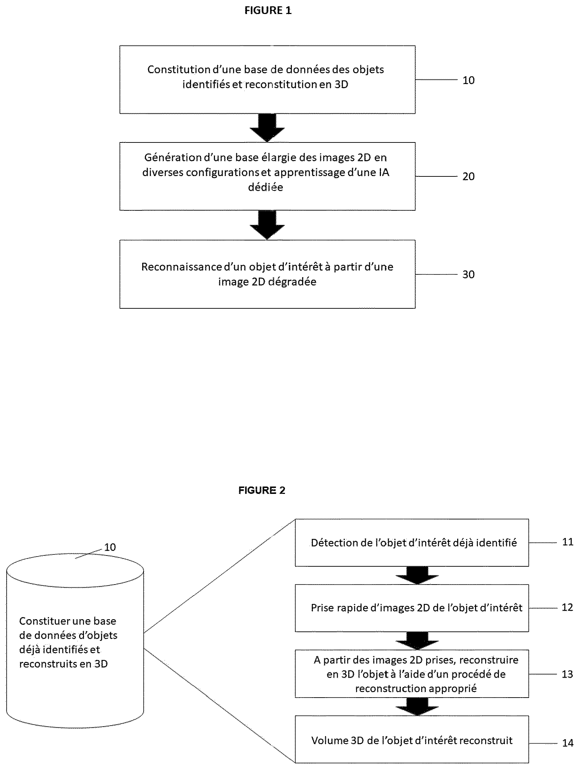

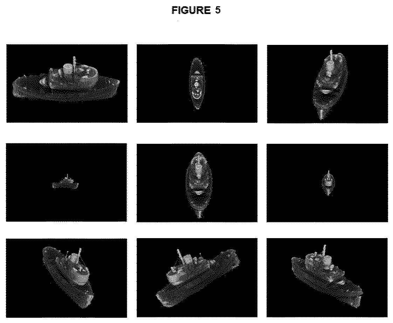

En référence aux figures 1 à 5, on a représenté les trois principales étapes du procédé de reconnaissance automatique d'objets dans des conditions difficiles par une IA entrainée sur une base d'images labélisées dont l'augmentation de sa représentativité a été réalisée via des reconstructions 3D des dits objets.

La première étape principale 10 a pour objet de constituer une base de données d'objets déjà identifiés et reconstruits en 3D.

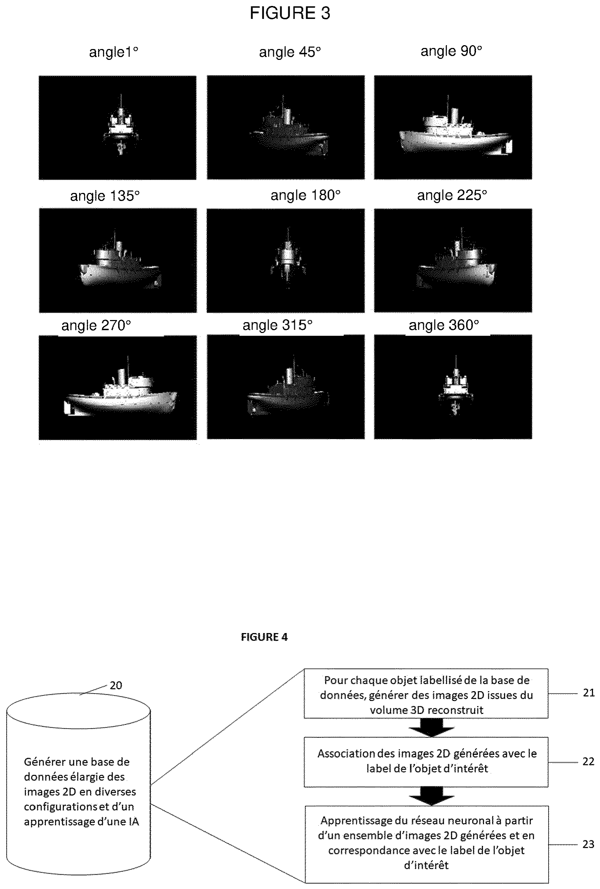

L'étape 10 débute par une sous étape dans laquelle on procède à la détection préalable de l'objet à intérêt 11 (par exemple un bateau) déjà identifié. Ensuite on procède à une prise rapide 12 des images 2D (visible, infrarouge, en actif ou en passif) en nombre limité mais suffisant pour réaliser une reconstruction 3D de l'objet. Dépendant du contexte de l'objet, la prise des images 2D peut être réalisée selon plusieurs scénarios tels que Scénario « sol-sol », Scénario « mer-mer », Scenario « air-sol » et Scenario « air-mer ». Pour un bateau, la prise des images peut être réalisée selon des scénarios tels que Scénario « mer-mer » et Scenario « air-mer ». Par exemple en référence à la figure 3 on a représenté des exemples d'images 2D d'un bateau prises en SWIR en plan horizontal (Scénario « mer-mer ») selon 9 angles différents pour la reconstruction 3D de l'objet.

A partir des images 2D ainsi disponibles (figure 3), on procède à la reconstruction 3D 13 de l'objet à l'aide d'un procédé de reconstruction approprié (tomographie réflective, par exemple). On obtient alors un volume tridimensionnel (3D) 14 de l'objet (en voxels).

En pratique, le volume tridimensionnel peut être obtenu grâce à un procédé de reconstruction par transmission ou par fluorescence (Optical Projection Tomography, imagerie nucléaire ou X-Ray Computed Tomography) ou par réflexion (rétro réflexion d'une onde laser ou par réflexion solaire dans le cas de la bande visible (entre 0,4µm et 0,7µm) ou proche infrarouge (entre 0,7µm et 1µm) ou SWIR (entre 1µm et 3µm) ou en prenant en compte l'émission thermique de l'objet (imagerie thermique entre 3µm et 5µm et entre 8µm et 12µm), ce processus de reconstruction tridimensionnelle est décrit dans le brevet « Système optronique et procédé d'élaboration d'images en trois dimensions dédiés à l'identification » (US8836762B2, EP2333481 B1).

On utilise l'ensemble des voxels issus d'une reconstruction tridimensionnelle avec l'intensité associée, cette reconstruction ayant de préférence été obtenue par rétro réflexion.

A l'issue de la reconstruction 3D, on obtient une base des données comprenant des enregistrements relatifs aux objets déjà identifiés, soit {Volume3D_Objet(n) Label_Objet(n)}, n=1,2,..,N (N étant le nombre d'enregistrements d'objets identifiés).

Il est à noter que la base de données peut être enrichie par des objets issus de modélisations ou de simulations.

La deuxième étape principale 20 du procédé conforme à l'invention consiste à générer une base de données élargie des images 2D en diverses configurations et d'un apprentissage d'une IA (Intelligence Artificielle) dédiée.

En pratique, pour chaque objet labélisé de la basée de données, on procède à la génération 21 d'images 2D issues (vues) du volume 3D ainsi reconstruit.

Dans un ensemble de modes de réalisation de l'invention, le volume 3D est délimité extérieurement par une surface 3D, et, si le volume est incomplet, la surface 3D est ouverte.

Par exemple les vues issues du volume 3D sont réalisées selon divers angles (theta, phi, Phi), à différentes distances. Dans un ensemble de modes de réalisation de l'invention, le volume 3D peut également être modifié, avec par exemple par l'application de différents taux d'occlusions et/ou avec différents bruits ajoutés.

Dans un ensemble de modes de réalisation de l'invention, l'ajout de bruit sur la surface 3D, ou d'une occlusion, entraîne ainsi une modification de la surface 3D initiale, générant de nouvelles images 2D.

Pour des visages, les vues issues du volume 3D reconstruit de l'humain à identifier peuvent être de différentes natures et avec ou sans accessoires, chapeau, lunettes de vision, lunettes de soleil, barbe, etc.

Dans un ensemble de modes de réalisation de l'invention, les accessoires sont superposés localement sur des éléments de la surface 3D, ce qui permet de modifier la frontière 3D du volume reconstruit.

La pluralité d'images numériques 2D ainsi générées selon une pluralité de modes de prises de vue à partir du volume 3D modifié ou non de chaque objet sont ensuite associées 22 au Label de l'objet. Ainsi, un grand nombre de vue 2D, correspondant à différents point de vue du volume 3D, et le cas échéant des modifications de celui-ci, peut être ajouté à la base de données d'apprentissage.

On obtient alors les éléments suivants : Volume3D_Objet(n) →{Image2D_Objet(n, theta, phi, Phi, distance, Taux_occlusion,...), Label_Objet(n)}

Enfin, on procède au choix d'un réseau de neurones convolutif, par exemple de type Residual Network tel que ResNet50 pour l'entrainer 23 sur un jeu d'apprentissage composés d'un ensemble d'images numériques 2D {Images2D_Objet(n)} ainsi générées et en correspondance avec les labels {Labels_Objet(n)}, n = 1,2,3,...,N pour tous les objets N à intérêt.

La troisième étape principale 30 consiste à reconnaître un objet à intérêt à partir d'une image 2D dégradée de celui-ci.

Par exemple, la détection préalable d'un ObjetX à intérêt consiste en une prise d'une ou plusieurs images 2D (en visible, infrarouge, en actif ou en passif) dans des conditions opérationnelle restrictives (météo dégradée, distance importante, occlusions de l'objet, angle de prise quelconque...).

Ensuite, on utilise le réseau de neurones convolutif ainsi entrainé pour délivrer en sortie le label de l'objet à intérêt et un indice de confiance (score) lié à la reconnaissance de l'objet à intérêt.

Si l'indice de Confiance (Score) est élevé (supérieur à 95%, par exemple), il est prévu d'arrêter la reconnaissance.

Si le degré de Confiance (Score) est faible, alors l'opérateur peut chercher d'autres éléments pour augmenter la réussite de l'identification.

Au fur et à mesure que la base des objets déjà identifiés et reconstruits est importante, la fiabilité de reconnaissance de l'IA dédiée est forte et implicitement l'identification d'un quelconque objet sera une réussite.

A titre d'exemple non limitatif, le procédé de reconnaissance a été appliqué à un bateau labélisé « bateau2E0A0 » à partir d'une seule image 2D provenant d'une prise de vue perpendiculaire à la surface de la mer (Scenario « air-mer »), cette image n'appartenant pas à la base de données 2D d'apprentissage. L'image a été redimensionnée à une résolution de 124 pixels x 253 pixels pour être compatible avec le processus d'interrogation de l'IA.

## Revendications

1. Procédé de reconnaissance d'un objet à intérêt au sein d'une image numérique 2D dégradée dudit objet, **caractérisé en ce qu'**il comprend les étapes suivantes :
- détecter (11) au préalable l'objet à intérêt au sein d'une image numérique 2D et lui attribuer un label ;
- reconstruire (13) un volume 3D dudit objet ainsi labellisé à partir d'une pluralité d'images (12) numériques 2D disponibles dudit objet à intérêt ;
- mémoriser dans une base de données un enregistrement relatif audit objet ainsi reconstruit en 3D et labellisé ;
- pour chaque enregistrement ainsi mémorisé,
- générer (21) une nouvelle pluralité d'images numériques 2D selon une pluralité de modes de vue à partir du volume 3D ainsi reconstruit (14) de chaque objet, les modes de prises de vue comprenant des modes de prise de vues à différents niveaux d'occlusion et/ou d'ajout de bruit ;
- entrainer (23) un réseau de neurones sur un jeu d'apprentissage composés d'un ensemble élargi d'images numériques 2D ainsi générées et en correspondance (22) avec le label de l'objet à intérêt à reconnaître ;
- à partir d'une image numérique 2D dégradée dudit objet à intérêt à reconnaitre,
- utiliser (30) le réseau de neurones ainsi entrainé pour délivrer en sortie le label de l'objet et un indice de confiance lié à la reconnaissance de l'objet à intérêt.

2. Procédé selon la revendication 1 dans lequel, si l'indice de confiance est supérieur à un seuil, il est prévu d'arrêter la reconnaissance sinon rechercher d'autres éléments pour augmenter la réussite de l'identification.

3. Procédé selon la revendication 1 ou la revendication 2, **caractérisé en ce que** la reconstruction (13) en volume 3D de l'objet appartient au groupe formé par tomographie réflective, tomographie par transmission.

4. Procédé selon l'une quelconque des revendications précédentes, **caractérisé en ce que** la pluralité d'images 2D issues du volume 3D reconstruit de l'objet appartiennent au groupe formé par images 2D de modes de vue à partir du volume 3D prises à divers angles (theta, phi, Phi...) images prises à différentes distances ; images avec différents taux d'occlusions, images avec différents bruits.

5. Procédé selon l'une quelconques des revendications 1 à 4, **caractérisé en ce que** la pluralité d'images 2D issues du volume 3D reconstruit pour des objets à intérêt, de type êtres humains, appartiennent au groupe formé par accessoires, chapeau, lunettes de vision, lunettes de soleil et barbe.

6. Procédé selon l'une quelconque des revendications précédentes dans lequel le réseau de neurones est un réseau de neurones de convolution de type appartenant au groupe formé par ResNet50, ResNet101, ResNet152.

7. Programme d'ordinateur comprenant des instructions de programme pour l'exécution d'un procédé selon l'une des revendications précédentes, lorsque ledit programme est exécuté sur un ordinateur.

## Patentansprüche

1. Verfahren zum Erkennen eines Objekts von Interesse innerhalb eines minderwertigen digitalen 2D-Bilds des Objekts, **dadurch gekennzeichnet, dass** es die folgenden Schritte umfasst:
- im Voraus Erkennen (11) des Objekts von Interesse innerhalb eines digitalen 2D-Bilds und Zuweisen einer Bezeichnung zu diesem;
- Rekonstruieren (13) eines 3D-Volumens des so bezeichneten Objekts anhand einer Vielzahl von verfügbaren digitalen 2D-Bildern (12) von dem Objekt von Interesse;
- Speichern eines Eintrags betreffend das so in 3D rekonstruierte und bezeichnete Objekt in einer Datenbank;
- für jeden so gespeicherten Eintrag,
- Erzeugen (21) einer neuen Vielzahl von digitalen 2D-Bildern gemäß einer Vielzahl von Ansichtsmodi anhand des so rekonstruierten 3D-Volumens (14) von jedem Objekt, wobei die Aufnahmemodi Aufnahmemodi mit verschiedenen Stufen einer Abdeckung und/oder eines Hinzufügens von Bildrauschen umfassen;
- Trainieren (23) eines neuronalen Netzwerks an einem Lernsatz, zusammengesetzt aus einer erweiterten Gruppe von so erzeugten digitalen 2D-Bildern und in Übereinstimmung (22) mit der Bezeichnung des zu erkennenden Objekts von Interesse;
- anhand eines minderwertigen digitalen 2D-Bildes des zu erkennenden Objekts von Interesse,
- Verwenden (30) des so trainierten neuronalen Netzwerks, um am Ausgang die Bezeichnung des Objekts und eine Konfidenzindexzahl, die mit der Erkennung des Objekts von Interesse verknüpft ist, bereitzustellen.

2. Verfahren nach Anspruch 1, wobei, wenn die Konfidenzindexzahl über einem Schwellenwert liegt, vorgesehen ist, die Erkennung anzuhalten, anderenfalls andere Elemente zu suchen, um den Erfolg der Identifizierung zu erhöhen.

3. Verfahren nach Anspruch 1 oder Anspruch 2, **dadurch gekennzeichnet, dass** die Rekonstruktion (13) als 3D-Volumen des Objekts zur Gruppe gehört, die durch Reflexionstomographie, Transmissionstomographie gebildet ist.

4. Verfahren nach einem der vorhergehenden Ansprüche, **dadurch gekennzeichnet, dass** die Vielzahl von 2D-Bildern, die aus dem rekonstruierten 3D-Volumen des Objekts hervorgegangen sind, zur Gruppe gehören, die aus 2D-Bildern von Ansichtsmodi anhand des 3D-Volumens, die aus verschiedenen Winkeln (theta, phi, Phi...) aufgenommen wurden, Bildern, die aus verschiedenen Entfernungen aufgenommen wurden; Bildern mit verschiedenen Abdeckverhältnissen, Bildern mit unterschiedlichem Bildrauschen gebildet sind.

5. Verfahren nach einem der Ansprüche 1 bis 4, **dadurch gekennzeichnet, dass** die Vielzahl von 2D-Bildern, die aus dem rekonstruierten 3D-Volumen für die Objekte von Interesse hervorgegangen sind, die vom Typ Mensch sind, zur Gruppe gehört, die aus Accessoires, Hut, Brille, Sonnenbrille und Bart gebildet ist.

6. Verfahren nach einem der vorhergehenden Ansprüche, wobei das neuronale Netzwerk ein gefaltetes neuronales Netzwerk vom Typ ist, der zur durch ResNet50, ResNet101, ResNet152 gebildeten Gruppe gehört.

7. Computerprogramm, umfassend Programmbefehle zum Ausführen eines Verfahrens nach einem der vorhergehenden Ansprüche, wenn das Programm auf einem Computer ausgeführt wird.

## Claims

1. A method for recognising an object of interest in a degraded 2D digital image of said object, **characterised in that** it comprises the following steps:
- detecting (11), beforehand, the object of interest in a 2D digital image and assigning it a label;
- reconstructing (13) a 3D volume of said object thus labelled from a plurality of available 2D digital images (12) of said object of interest;
- storing, in a database, a record relating to said object thus reconstructed in 3D form and labelled;
- for each record thus stored,
- generating (21) a new plurality of 2D digital images according to a plurality of viewing modes from the thus reconstructed 3D volume (14) of each object, the exposure modes comprising exposure modes with different levels of occlusion and/or of added noise;
- training (23) a neural network on a learning set composed of an expanded set of 2D digital images thus generated and corresponding (22) to the label of the object of interest to recognise;
- from a degraded 2D digital image of said object of interest to recognise,
- using (30) the neural network thus trained to deliver as output the label of the object and a confidence index linked to the recognition of the object of interest.

2. The method according to claim 1, wherein, if the confidence index is above a threshold, provision is made to stop the recognition, and otherwise search for other elements to increase the success of the identification.

3. The method according to claim 1 or claim 2, **characterised in that** the 3D volume reconstruction (13) of the object belongs to the group formed by reflective tomography, transmission tomography.

4. The method according to any one of the preceding claims, **characterised in that** the plurality of 2D images derived from the reconstructed 3D volume of the object belong to the group formed by 2D viewing mode images from the 3D volume taken at various angles (theta, phi, Phi, etc.), images taken at different distances; images with different occlusion rates, images with different noises.

5. The method according to any one of claims 1 to 4, **characterised in that** the plurality of 2D images derived from the reconstructed 3D volume for objects of interest, of human being type, belong to the group formed by accessories, cap, spectacles, sunglasses and beard.

6. The method according to any one of the preceding claims, wherein the neural network is a convolutional neural network of the type belonging to the group formed by ResNet50, ResNet101, ResNet152.

7. A computer program comprising program instructions for the execution of a method according to one of the preceding claims, when said program is run on a computer.
